# EUROPÄISCHE PATENTSCHRIFT

(11) **EP 1 379 767 B1**
(45) Veröffentlichungstag und Bekanntmachung des Hinweises auf die Patenterteilung: **08.10.2008**
(21) Anmeldenummer: 02716768.3
(22) Anmeldetag: 13.02.2002
(51) Int. Cl.: F02D 41/02, F02D 37/02, F02P 5/04, F02D 41/40

(54) **VERFAHREN ZUM WARMLAUF EINES EINER FREMDGEZÜNDETEN, DIREKTEINSPRITZENDEN VERBRENNUNGSKRAFTMASCHINE NACHGESCHALTETEN KATALYSATORS**
METHOD FOR WARMING UP A CATALYTIC CONVERTER ARRANGED DOWNSTREAM FROM A SPARK-IGNITION, DIRECT INJECTION INTERNAL COMBUSTION ENGINE
PROCEDE PERMETTANT L'ECHAUFFEMENT D'UN CATALYSEUR CONNECTE EN AVAL D'UN MOTEUR A COMBUSTION INTERNE A INJECTION DIRECTE ET ALLUMAGE COMMANDE

(30) Priorität: 15.03.2001 DE 10114050
(43) Veröffentlichungstag der Anmeldung: 14.01.2004
(73) Patentinhaber: Volkswagen Aktiengesellschaft, 38436 Wolfsburg (DE)
(72) Erfinder: POTT, Ekkehard, 38518 Gifhorn (DE); BREE, Eric, 38446 Wolfsburg (DE); PHILIPP, Kai, 38179 Lagesbüttel (DE); ZILLMER, Michael, 38173 Sickte (DE)
(74) Vertreter: Schneider, Henry
(86) Internationale Anmeldenummer: PCT/EP2002/001494
(87) Internationale Veröffentlichungsnummer: WO 2002/075136

(56) Entgegenhaltungen:
- EP-A- 0 826 869
- EP-A- 0 856 655
- EP-A- 0 943 793
- EP-A- 1 010 880
- DE-A- 19 913 316

## Beschreibung

Die Erfindung betrifft ein Verfahren zum Warmlauf mindestens eines einer fremdgezündeten, direkteinspritzenden Verbrennungskraftmaschine nachgeschalteten Katalysators, insbesondere nach einem Motorstart der Verbrennungskraftmaschine, mit den Merkmalen der Oberbegriffe der unabhängigen Ansprüche.

Katalysatoren werden in Abgastrakten von Verbrennungskraftmaschinen eingesetzt, um eine Konvertierung von Schadstoffen in Abgasen der Verbrennungskraftmaschine in weniger umweltrelevante Komponenten vorzunehmen. Um ihre Betriebsbereitschaft zu erhalten, müssen Katalysatoren sich mindestens auf eine katalysatorspezifische Anspring- oder Light-off-Temperatur erwärmt haben. Dabei bezeichnet die Anspringtemperatur die Temperatur, bei der der Katalysator einen Konvertierungswirkungsgrad von 50 % aufweist. Da der Katalysator insbesondere nach einem Motorkaltstart der Verbrennungskraftmaschine für eine gewisse Zeitspanne seine Anspringtemperatur in aller Regel noch nicht aufweist, gelangen die Schadstoffe des Abgases während dieser Zeitspanne unkonvertiert in die Atmosphäre. Um einen Katalysatorwarmlauf zu beschleunigen, sind verschiedene Strategien bekannt.

Bekannt ist, einen Zündwinkel, also einen Zeitpunkt, an dem eine Zündung eines Luft-Kraftstoff-Gemisches in einem Zylinder erfolgt, während des Warmlaufs in Richtung spät bezüglich eines Zündwinkels mit höchstem Wirkungsgrad zu verstellen. Durch diese Zündwinkelspätverstellung wird der Arbeitswirkungsgrad der Verbrennung vermindert und gleichzeitig eine Verbrennungs- beziehungsweise Abgastemperatur erhöht. Infolge des heißeren Abgases wird die Katalysatoraufheizung beschleunigt. Das Verfahren der Spätzündung findet seine Begrenzung bei Zündwinkeln, bei denen eine Laufunruhe der Verbrennungskraftmaschine in unzulässiger Weise steigt und eine zuverlässige Zündung nicht mehr gewährleistet werden kann.

Ein weiteres Verfahren zur Erhöhung der Abgastemperatur wird durch eine so genannte Mehrfacheinspritzung eröffnet, welche in jüngster Zeit für direkteinspritzende, fremdgezündete Verbrennungskraftmaschinen beschrieben wurde, bei denen der Kraftstoff mittels Einspritzventilen direkt in einen Brennraum eines Zylinders eingespritzt wird (WO 00/08328, EP 0 982 489 A2, WO 00/57045). Dabei wird eine während eines Arbeitsspiels eines Zylinders zuzuführende Kraftstoffgesamtmenge aufgeteilt in zwei Portionen mit zwei Einspritzvorgängen einem Brennraum des Zylinders zugeführt. Eine erste, frühe Einspritzung (Homogeneinspritzung) erfolgt während eines Ansaugtaktes des Zylinders derart, dass die eingespritzte Kraftstoffmenge zum nachfolgenden Zündzeitpunkt eine homogene Verteilung im Brennraum aufweist. Eine zweite, späte Einspritzung (Schichteinspritzung) wird dagegen während eines anschließenden Verdichtungstaktes, insbesondere während der zweiten Hälfte des Verdichtungstaktes, durchgeführt und führt zu einer so genannten Schichtladung, bei der die eingespritzte Kraftstoffwolke sich im Wesentlichen im Bereich um eine Zündkerze des Zylinders konzentriert. Somit liegt im Mehrfacheinspritzungsbetrieb der Verbrennungskraftmaschine ein Mischbetrieb aus Schichtladung und Homogenladung vor. Der Mehrfacheinspritzungsbetrieb führt wegen seines speziell gearteten Brennverlaufs zu einer erhöhten Abgastemperatur gegenüber reinem Homogenbetrieb. Daneben besteht ein weiterer Vorteil der Mehrfacheinspritzung in einer verminderten Rohemission von Stickoxiden NOₓ und unverbrannten Kohlenwasserstoffen HC, die zu einer Senkung des Schadstoffdurchbruchs während der Warmlaufphase führt.

Die Einleitung der Mehrfacheinspritzung sowie ihr Abbruch, mit anderen Worten der Übergang vom Einfach- zum Mehrfacheinspritzungsbetrieb und zurück, stellt sich indes problematisch dar. Insbesondere führt die späte Schichteinspritzung wegen der nach Motorstart noch kalten Verbrennungskraftmaschine zu einem teilweisen Abschlagen des Kraftstoffes auf den Kolbenboden, an den Zylinderrändern und an der Zündkerze. Dieser bei der kalten Motortemperatur nicht verdampfende Kraftstoff steht im nachfolgenden Verbrennungsvorgang nicht zur Verfügung. Infolgedessen treten Zündaussetzer und unruhige Verbrennungsvorgänge auf. Ein weiteres Problem ist der zum Zeitpunkt der Umschaltung auf Mehrfacheinspritzung frühe Zündwinkel, der insbesondere vor dem oberen Zündtotpunkt ZOT liegt. Da auch ein Einspritzende der späten Einspritzung in oder kurz vor diesem Bereich liegt, kann keine optimale Gemischaufbereitung erfolgen, da nicht genügend Zeit zum Transport der Schichtwolke vom Injektor zur Zündkerze zur Verfügung steht. Als Folge sind erhöhte HC-Rohemissionen zu beobachten.

EP 0 856 655 A beschreibt ein Verfahren zum Katalysatorwarmlauf, das als Heizmaßnahmen die Mehrfacheinspritzung sowie die Spätzündung einsetzt. Dabei wird während des Motorhochlaufs eine Einfacheinspritzung im Ansaugtakt bei Basiszündwinkel durchgeführt. Unmittelbar nach Motorstartende setzt die Mehrfacheinspritzung und gleichzeitig die Spätzündung ein. Letztere wird jedoch nur über eine erste Phase des Warmlaufs aufrechterhalten, so dass die Heizwirkung verringert wird.

Aus EP 0 943 793 A ist ein Verfahren zur Katalysatoraufheizung bekannt, bei dem während des Motorstarts zunächst keine Maßnahme vorgenommen wird, sondern ein Homogenbetrieb mit Einfacheinspritzung und wirkungsgradoptimiertem Zündwinkel durchgeführt wird. Erst nach ausreichender Erwärmung des Kolbenbodens wird in den Mehrfacheinspritzungsbetrieb umgeschaltet, wobei optional auch der Zündwinkel auf einen konstanten späteren Zeitpunkt verstellt wird.

Aufgabe der vorliegenden Erfindung ist, ein Verfahren zum Katalysatorwarmlauf zu entwickeln, bei dem motorische Heizmaßnahmen, insbesondere ein Umschaltvorgang in einen Mehrfacheinspritzungsbetrieb und zurück, unter Ausbildung geringstmöglicher Schadstoffrohemissionen und minimaler Momentenschwankungen erfolgt.

Diese Aufgabe wird durch Verfahren mit den Merkmalen des unabhängigen Anspruchs 1 gelöst.

Erfindungsgemäß ist vorgesehen, dass diejenige innerhalb eines Warmlaufs ergriffene motorische Maßnahme oder Kombination von Maßnahmen, welche die stärkste Heizwirkung aufweist, frühestens nach einer Verzögerung von mindestens zwei Arbeitsspielen der Verbrennungskraftmaschine, insbesondere von mindestens drei, vorzugsweise mindestens fünf Arbeitsspielen, nach dem Motorstartende vorliegt. Dieses wird - neben einer sukzessiven Zuschaltung der Maßnahmen - dadurch erreicht, dass der Zündwinkel (α_{z}) gegenüber einem motorwirkungsgradoptimierten Zündpunkt zumindest zeitweise progressiv spätverstellt wird. Dabei wird unter Motorstartende hier der Zeitpunkt verstanden, an dem sich die Motordrehzahl nach einem Drehzahlüberschwinger während des Startvorgangs erstmalig in einem Drehzahlbereich von 95 bis 105 % einer Soll-Leertaufdrehzahl befindet. Falls während des Startvorgangs prinzipbedingt kein ausgeprägter Drehzahlüberschwinger auftritt, wird unter Motorstartende der Zeitpunkt verstanden, an dem sich die Motordrehzahl erstmalig für mindestens 0,5 Sekunden ununterbrochen in dem Drehzahlbereich von 95 bis 105 % der Soll-Leerlaufdrehzahl befindet. Ferner wird unter Arbeitsspiel das einmalige Durchlaufen aller Arbeitstakte eines Verbrennungsmotors an einem Zylinder verstanden. Beim Viertaktmotor sind dies zwei Kurbelwellenumdrehungen.

Da eine zunehmende Heizwirkung, das heißt eine zunehmende Abgastemperatur, notwendigerweise mit einem abnehmenden Motorwirkungsgrad und somit mit einem zunehmenden Drehmomentverlust verbunden ist, ermöglicht das erfindungsgemäße Verfahren, Momentensprünge gering zu halten, indem beispielsweise die Heizmaßnahmen sukzessive in der Reihenfolge ihres Heizpotentials nacheinander geschaltet und/oder verstärkt werden. Der durch Verstreichen der Verzögerungsphase bedingte Vorlauf bewirkt eine gewisse Vorerwärmung und Stabilisierung der Verbrennungskraftmaschine, so dass der anschließende Momentensprung reproduzierbarer und leichter ausregelbar ausfällt und eine zuverlässige Zündung und Verbrennung aufrecht erhalten werden kann.

Es ist insbesondere vorgesehen, dass nach dem Motorstartende in einer ersten Phase des Warmlaufs ein Einfacheinspritzungsbetrieb, während dessen zumindest zeitweise eine Zündwinkelspätverstellung erfolgt, durchgeführt wird und in einer anschließenden zweiten Phase in einen Mehrfacheinspritzungsbetrieb umgeschaltet wird. Dabei wird vorliegend unter Zündwinkelspätverstellung jeder Zündzeitpunkt verstanden, der nach einem Zündpunkt mit bestem Motorwirkungsgrad liegt, der insbesondere zu einem herabgesetzten Motorwirkungsgrad um mindestens 5 % führt. Demzufolge erfährt der Zylinder durch die in der ersten Phase erfolgende Zündwinkelspätverstellung bereits so weit eine Erwärmung, dass eine so genannte Wandfilmproblematik durch kondensierenden Kraftstoff aus einer späten Einspritzung des Mehrfacheinspritzungsbetriebs wirksam abgeschwächt werden kann.

Eine weitere erfindungsgemäße Verfahrensvariante sieht vor, dass nach dem Motorstartende in einer ersten Phase ein Betrieb mit 30 bis 100 % einer eingespritzten Kraftstoffmenge in zu einem Zündzeitpunkt im Wesentlichen homogener Gemischaufbereitung erfolgt und in einer anschließenden zweiten Phase ein Mehrfacheinspritzungsbetrieb, bei dem zum Zündzeitpunkt mindestens 35 % einer eingespritzten Kraftstoffmenge als Schichtladung vorliegen und mindestens 20 % der Kraftstoffmenge in Homogenverteilung. Vorzugsweise erfolgt dabei die erste Phase in reinem Homogenbetrieb, wobei der gesamte eingespritzte Kraftstoff zum Zündzeitpunkt in im Wesentlichen homogener Gemischaufbereitung vorliegt. Dabei soll im Rahmen der Erfindung unter Homogenbetrieb eine zum Zündzeitpunkt vorliegende Kraftstoffdichteverteilung im Brennraum verstanden werden, bei der eine Abweichung der höchsten Kraftstoffdichte an einem Punkt im Brennraum von der niedrigsten Kraftstoffdichte an einem anderen Brennraumpunkt weniger als 30 % beträgt. Eine derartige Homogenität lässt sich in bekannter Weise durch Einspritzung während eines Ansaugtaktes des Zylinders, insbesondere innerhalb der ersten Hälfte des Ansaugtaktes, erzielen.

Die Mehrfacheinspritzung umfasst vorzugsweise zwei Einspritzungen, wobei eine erste, frühe Einspritzung im Wesentlichen während eines Ansaugtaktes eines Zylinders, vorzugsweise in einer ersten Hälfte des Ansaugtaktes, und eine zweite, späte Einspritzung während eines anschließenden Verdichtungstaktes, vorzugsweise in einer zweiten Hälfte des Verdichtungstaktes, erfolgt. Auf diese Weise wird eine zum Zündzeitpunkt im Wesentlichen homogene Verteilung des in der frühen Einspritzung zugeführten Kraftstoffes erreicht und eine Schichtladung des in der späten Einspritzung zugeführten Kraftstoffes, die sich im Wesentlichen im Bereich einer Zündkerze des Zylinders konzentriert. Entsprechend wird für die frühe Einspritzung vorliegend auch der Begriff Homogeneinspritzung und für die späte Einspritzung der Begriff Schichteinspritzung verwendet. Wie bereits einleitend erläutert wurde, führt eine derartige gemischte Kraftstoffaufbereitung gleichzeitig zu einer Erhöhung der Verbrennungs- beziehungsweise Abgastemperatur und zu einer Absenkung einer Rohemission an unverbrannten Kohlenwasserstoffen und Stickoxiden. Dabei werden die Kraftstoffanteile der beiden Einspritzungen vorzugsweise so gewählt, dass die Homogeneinspritzung zu einem sehr mageren, allein nicht zündfähigen Luft-Kraftstoff-Gemisch führt, welches nur mit Hilfe der Schichtladung der zweiten Einspritzung verbrannt werden kann. Um ein vollständiges Abbrennen der Homogenladung zu gewährleisten, sollte die in der Homogeneinspritzung zugeführte Kraftstoffmenge 20 % der insgesamt zugeführten Kraftstoffmenge nicht unterschreiten. Vorzugsweise wird während des Warmlaufs insgesamt ein leicht mageres bis stöchiometrisches Luft-Kraftstoff-Gemisch mit einem Lambdawert zwischen 1 und 1,2 eingestellt. Dabei kann der Lambdawert während der Mehrfacheinspritzungsphase stärker ins Magere verschoben sein als während der vorausgegangenen ersten Phase des Warmlaufs. Hierdurch wird genutzt, dass eine Anspringtemperatur des Katalysators in einer mageren Abgasatmoshäre niedriger als in einer stöchiometrischen Atmosphäre ist.

Nach einer besonders vorteilhaften Ausgestaltung des Verfahrens wird die erste Phase zunächst mit einem frühen Zündwinkel begonnen, insbesondere mit einem Zündwinkel vor dem oberen Zündtotpunkt ZOT, der vorzugsweise dem während des Motorstarts gewählten Zündwinkel entspricht. Dieser frühe Zündwinkel wird nachfolgend progressiv in Richtung eines späteren Zeitpunktes, insbesondere nach ZOT verstellt. Die progressive Zündwinkelspätverstellung kann dabei kontinuierlich und/oder stufenweise erfolgen. Dabei wird vorzugsweise bei Umstellung in den Mehrfacheinspritzungsbetrieb unter Berücksichtigung eines Momentenausgleichs im Umschaltpunkt etwa der letzte Zündwinkel der ersten Phase übernommen und weiterhin progressiv spätverstellt. Es ist besonders bevorzugt vorgesehen, die Umstellung bei einem Zündwinkel durchzuführen, bei dem ein reiner Homogenbetrieb gerade noch möglich ist. Insbesondere sollte die Umstellung um 6°, insbesondere um 4°, vorzugsweise um 2°, vor diesem kritischen Zündwinkel erfolgen, um einen Spielraum für eine Kompensation der beim Umschalten in den Mehrfacheinspritzungsbetrieb erfolgenden Momentenänderung in Form eines korrigierenden Zündwinkeleingriffes zu gewährleisten. Die Umstellung in den Mehrfacheinspritzungsbetrieb kann vorteilhaft bei einem Zündwinkel von 0 bis 20° nach ZOT, insbesondere von 10° nach ZOT, unter Berücksichtigung der Momentenreserve erfolgen. Nach Umstellung in den Mehrfacheinspritzungsbetrieb sollte der Zündzeitpunkt progressiv in Richtung des motorausführungsabhängig maximal spätesten Zündwinkel verschoben werden, wobei ein maximaler Zündwinkel von 20 bis 45° nach ZOT, insbesondere von etwa 35° nach ZOT, nicht überschritten werden sollte.

Gemäß einer weiteren Verbesserung des Verfahrens wird nach Umstellung in den Mehrfacheinspritzungsbetrieb auch ein Einspritzwinkel, beziehungsweise Einspritzzeitpunkt der späten Schichteinspritzung progressiv spät verstellt, insbesondere im Wesentlichen synchron mit der gleichzeitig erfolgenden fortschreitenden Zündwinkelspätverstellung.

Vorzugsweise wird ein Einspritzende der späten Einspritzung mit einem im Wesentlichen konstanten Abstand zu dem Zündwinkel von 50 bis 100°, insbesondere von 60 bis 80°, verschoben. Denkbar ist jedoch auch, diesen Abstand motordrehzahl- und/oder einspritzdruckabhängig zu variieren. Auf diese Weise kann stets eine gleichbleibende, optimale Zeit für die Gemischaufbereitung der Schichteinspritzung und Transport der Kraftstoffwolke zur Zündkerze gewährleistet werden.

Eine Beendigung des Mehrfacheinspritzungsbetriebes beispielsweise nach zumindest teilweisem Warmlauf eines zumindest ersten Katalysators kann besonders vorteilhaft in Abhängigkeit eines aktuellen Betriebspunktes der Verbrennungskraftmaschine erfolgen. Befindet sich die Verbrennungskraftmaschine zu diesem Zeitpunkt im Beginn einer Lastanforderungsphase, beispielsweise in einer Anfahrts- und/oder einer Beschleunigungsphase, so kann die für die Heizmaßnahme aufgewandte Momentenreserve unmittelbar genutzt werden und die Mehrfacheinspritzung und/oder die Zündwinkelspätverstellung direkt beendet werden und die Verbrennungskraftmaschine in den Homogen- oder Schichtbetrieb umgeschaltet werden. Befindet sich dagegen die Verbrennungskraftmaschine nach erfolgtem Warmlauf in einer Konstantlastphase, beispielsweise in einem Leerlauf, erfolgt vorzugsweise eine Zurücknahme der Heizmaßnahmen in umgekehrter Reihenfolge ihrer Einleitung. Insbesondere erfolgt eine progressive Frühverstellung des Einspritzwinkels der Schichteinspritzung und/oder des Zündwinkels und eine Umschaltung in den Einfacheinspritzungsbetrieb, sobald der Zündwinkel einen Homogenbetrieb gestattet.

Alle Zeitabläufe der beschriebenen Verfahren, das sind insbesondere die Einleitung derjenigen motorischen Maßnahme oder derjenigen Kombination von Maßnahmen mit der stärksten Heizwirkung, die Umschaltung in den Mehrfacheinspritzungsbetrieb und/oder das Erkennen des erfolgten Warmlaufs und Zurücknahme der Maßnahmen, können anhand einer gemessenen und/oder modellierten Motor- und/oder Abgas- und/oder Katalysatortemperatur erfolgen und/oder anhand einer seit Motorstartende verstrichenen Zeit und/oder erfolgten Kurbelwellenumdrehungen und/oder zurückgelegten Strecke und/oder einem kumulierten Abgaswärmestrom.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: einen zeitlichen Verlauf von Motordrehzahl, Zündwinkel und Einspritzwinkel während einer Warmlaufphase nach einem Verfahren gemäß dem Stand der Technik;
- Figur 2: zeitliche Verläufe von Rohemissionen unverbrannter Kohlenwasserstoffe während einer Warmlaufphase nach zwei nicht-erfindungsgemäßen Verfahren;
- Figur 3: zeitliche Verläufe von Motordrehzahl, Zündwinkel und Einspritzwinkel gemäß einem Verfahren zum Katalysatorwarmlauf gemäß einer nicht in den Schutz der vorliegenden Erfindung fallenden Ausführungsform;
- Figur 4: zeitliche Verläufe von Motordrehzahl, Zündwinkel und Einspritzwinkel gemäß einer ersten Ausführungsform der Erfindung;
- Figur 5: zeitliche Verläufe von Motordrehzahl, Zündwinkel und Einspritzwinkel gemäß einer zweiten Ausführungsform der Erfindung;
- Figur 6: zeitliche Verläufe von Motordrehzahl, Zündwinkel und Einspritzwinkel während einer Beendigung des Warmlaufs gemäß einer dritten Ausführungsform der Erfindung und
- Figur 7: zeitliche Verläufe von Motordrehzahl, Zündwinkel und Einspritzwinkel während der Beendigung des Warmlaufs gemäß einer vierten Ausführungsform der Erfindung.

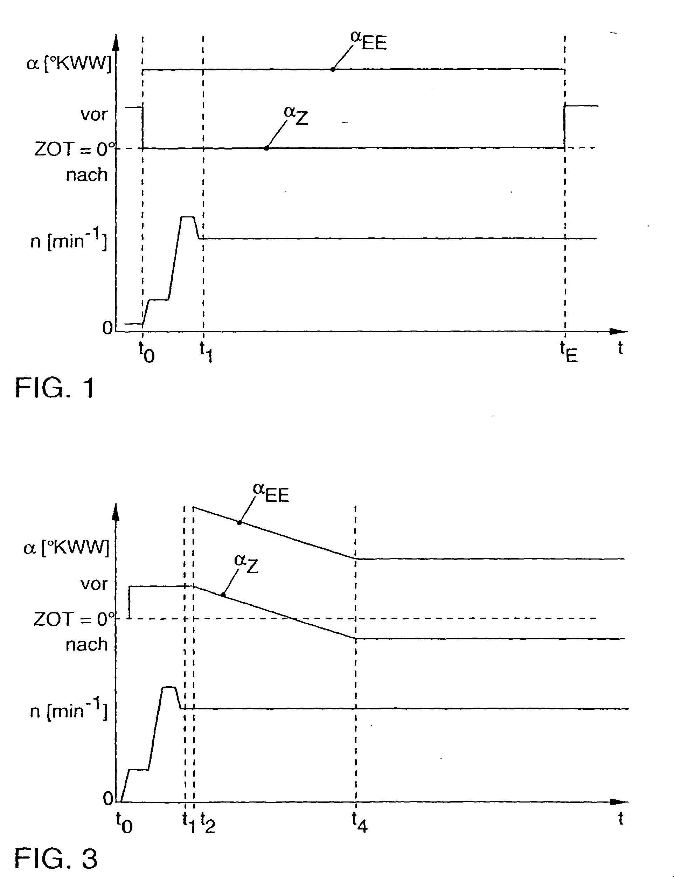

Figur 1 zeigt einen Ansatz zum Warmlauf eines einer direkteinspritzenden Verbrennungskraftmaschine nachgeschalteten Katalysators gemäß dem Stand der Technik. Vor einem Zeitpunkt t₀ erfolgt ein Anlasserstart, währenddessen ein Anlasser anläuft, an die Verbrennungskraftmaschine ankoppelt und diese zunächst auf eine Mindestdrehzahl antreibt. Zwischen t₀ und t₁ findet eine Motorstartphase statt, bei der die Motordrehzahl n der Verbrennungskraftmaschine hochläuft, um sich schließlich im Bereich einer weitgehend konstanten Soll-Leerlaufdrehzahl einzupendeln. Bis zu dem Motorstartbeginn t₀ erfolgt ein Homogenbetrieb der Verbrennungskraftmaschine, bei dem eine gesamte zuzuführende Kraftstoffmenge in einem einzigen Einspritzvorgang während eines Ansaugtaktes einem Zylinder zugeführt wird (Einfacheinspritzung). Dabei wird der Zündwinkel α_{z} auf einen Kurbelwellenwinkel KWW vor dem oberen Zündtotpunkt ZOT, insbesondere auf den Zündwinkel mit bestem Motorwirkungsgrad beziehungsweise der höchsten Startsicherheit, eingestellt.

Entsprechend bekannter Verfahren wird, um eine Abgastemperatur anzuheben und ein Aufheizen des nachgeschalteten Katalysators zu beschleunigen, bereits mit Beginn des Motorhochlaufs zum Zeitpunkt t₀ die Verbrennungskraftmaschine in einen Mehrfacheinspritzungsbetrieb umgeschaltet. Dabei wird ein Teil der Kraftstoffmenge während des Ansaugtaktes eingespritzt, so dass dieser zum Zündzeitpunkt in homogener Gemischaufbereitung vorliegt (Homogeneinspritzung). Die restliche Kraftstoffmenge wird in einer zweiten, späten Einspritzung während eines Verdichtungstaktes, insbesondere während dessen zweiten Hälfte, eingespritzt (Schichteinspritzung). Gemäß dem dargestellten Verfahren wird während des Warmlaufs der Einspritzwinkel α_{EE} für die späte Einspritzung (Schichteinspritzung) konstant gehalten. Zeitgleich mit Einleitung der Mehrfacheinspritzung wird herkömmlich der Zündwinkel α_{z} in Richtung eines späteren Zeitpunktes verstellt, typischerweise in den Bereich des oberen Zündtotpunktes ZOT.

Problematisch an der hier dargestellten Vorgehensweise ist zum Einen der kurze zeitliche Abstand zwischen Einspritzzeitpunkt der späten Schichteinspritzung und Zündzeitpunkt sowie der zum Einspritzzeitpunkt geringe Abstand zwischen Einspritzventil und Kolbenboden. Hierdurch bedingt kann bis zum Zündpunkt keine optimale Ausbildung des späteingespritzten Kraftstoffes als Schichtwolke und Transport derselben in den Bereich der Zündkerze erfolgen. Vielmehr liegt der Kraftstoff zum Zündzeitpunkt in Form einer Schichtladungswolke überwiegend im Bereich des Kolbenbodens konzentriert vor. Ferner wird die Gemischaufbereitung durch die unmittelbar bei Motorstartbeginn t₀ einsetzende späte Einspritzung des Mehrfacheinspritzungsbetriebs beeinträchtigt, da aufgrund des noch kalten Motors, insbesondere des kalten Kolbenbodens, der späteingespritzte Kraftstoff zur Kondensation an Kolbenboden, an den Zylinderwänden und an der Zündkerze neigt und ein vollständiges Verdampfen aufgrund der niedrigen Temperaturen nicht stattfindet. Die Folge der zu kurzen Gemischaufbereitungszeit und des kalten Brennraums sind eine erhöhte Laufunruhe, deutlich erhöhte HC-Rohemissionen, Fehlzündungen und gegebenenfalls ein Ausgehen der Verbrennungskraftmaschine. Die Heizmaßnahmen werden herkömmlich zum Zeitpunkt t_{E} beendet, wenn der Katalysator seine Anspringtemperatur erreicht hat. Ebenso wie bei Einleitung des Mehrfacheinspritzungsbetriebs wird an dieser Stelle ein deutlicher Momentensprung beobachtet.

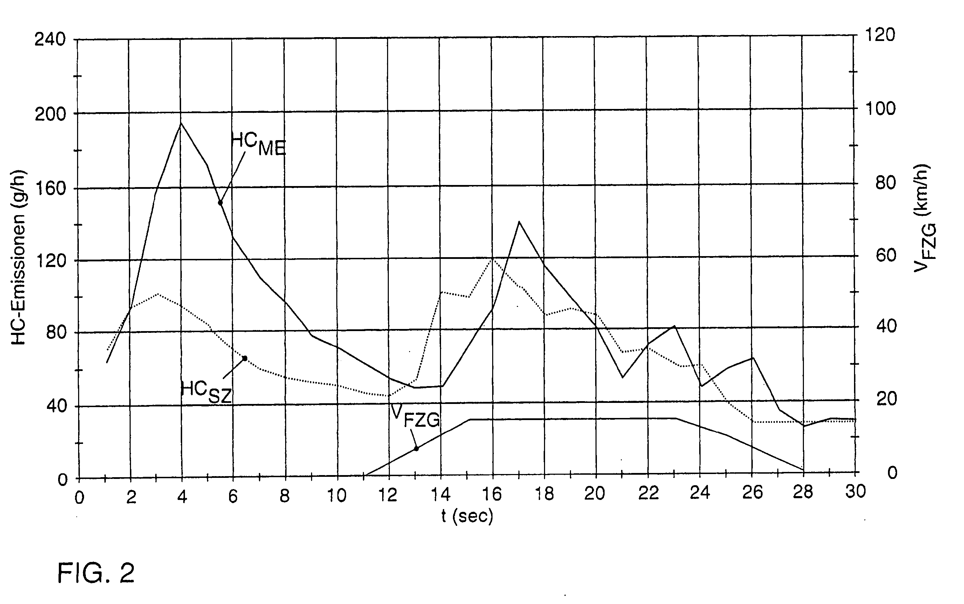

Figur 2 stellt gemessene Verläufe der Rohemission von unverbrannten Kohlenwasserstoffen HC dar, wenn die Verbrennungskraftmaschine gemäß zwei nicht-erfindungsgemäßen Verfahren zum Katalysatorwarmlauf betrieben wird. Die Messungen erfolgten nach einem Motorkaltstart bei 20°C und dem abgebildeten Fahrzeuggeschwindigkeitsprofil v_{FZC} gemäß dem Neuen Europäischen Fahrzyklus NEFZ. Der Nullpunkt der Zeitachse entspricht jeweils dem Motorstartende (Zeitpunkt t₁ in Figur 1), also dem Zeitpunkt, an dem sich die Motordrehzahl nach einem Drehzahlüberschwinger während des Startvorgangs erstmalig im Bereich einer Soll-Leerlaufdrehzahl ± 5 % befindet. Das Luft-Kraftstoffverhältnis wurde in beiden Fällen auf einen leicht mageren Lambdawert zwischen 1,0 und 1,1 eingeregelt. Die Kurve HC_{sz} zeigt die HC-Rohemission der Verbrennungskraftmaschine bei herkömmlicher Spätzündung mit einem spätesten Zündwinkel von etwa 10° nach ZOT im Einfacheinspritzungsbetrieb mit homogener Gemischaufbereitung. Hingegen ist durch den Verlauf HC_{ME} die HC-Rohemission im Mehrfacheinspritzungsbetrieb mit 50 % der eingespritzten Kraftstoffmenge in homogener und 50 % in geschichteter Kraftstoffaufbereitung dargestellt. Dabei betrug ein Ansteuerende der Späteinspritzung etwa 40° vor ZOT und ein spätester Zündwinkel etwa 27° nach ZOT. Bei beiden Messungen wurden die jeweiligen Heizmaßnahmen, also Spätzündung (HC_{sz}) beziehungsweise Mehrfacheinspritzung/Spätzündung (HC_{ME}), unmittelbar nach Motorstartende t₁ eingeleitet. Beide Verläufe zeigen bei etwa 3 bis 4 Sekunden deutliche HC-Emissionsmaxima. Es wird deutlich, dass durch den Mehrfacheinspritzungsbetrieb sehr viel höhere Schadstoffemissionen zu beobachten sind als bei der konventionellen Spätzündung. Bei Einleitung der Heizmaßnahme liegt zunächst noch ein vergleichsweise früher Zündwinkel von etwa 10° vor ZOT vor. In einem Zeitraum von zirka 1,5 bis 3 Sekunden wird der Zündwinkel auf den heizmaßnahmenabhängig spätesten Zündwinkel verschoben. Bei der herkömmlichen Spätzündung wiest die im Wesentlichen homogene Gemischaufbereitung im gesamten Zündwinkelfenster zwischen 20° vor ZOT und 10° nach ZOT eine hinreichende Zündsicherheit auf, so dass nur ein HC-Emissionsmaximum von etwa 100 g/h erreicht wird. Wird hingegen als Heizmaßnahme die Mehrfacheinspritzung eingesetzt, so ist zu Beginn der Heizmaßnahme, das heißt bei einem Zündwinkel von 10° vor ZOT, keine entflammungssichere Gemischaufbereitung möglich. Erst während der Zündwinkelverschiebung auf den spätestmöglichen Zündwinkel verbessert sich die Gemischaufbereitung und die HC-Emissionen nehmen wegen der höheren Entflammungssicherheit ab. Daher ist da HC-Emissionsmaximum mit zirka 190 g/h deutlich höher und überdies zeitlich ausgedehnter als bei konventioneller Spätzündung. Zu erkennen ist auch, dass bei Zündwinkeln gemäß Stand der Technik im Bereich um ZOT (vgl. Fig. 1) keine günstige Gemischaufbereitung möglich ist.

Figur 3 zeigt eine Einleitung der motorischen Heizmaßnahmen gemäß einer nicht in den Schutzbereich des vorliegenden Patents fallenden Ausgestaltung. Kurz nach Motorstartende (t₁) wird zum Zeitpunkt t₂ eine Katalysatorheizanforderung, beispielsweise anhand einer gemessenen oder modellierten Katalysatortemperatur, erkannt. Daraufhin wird der Mehrfacheinspritzungsbetrieb mit einer frühen, im Ansaugtakt erfolgenden Homogeneinspritzung und einer späten, im Verdichtungstakt stattfindenden Schichteinspritzung eingeleitet, wobei das Ansteuerende der Schichteinspritzung α_{EE} zunächst auf einen sehr frühen Zeitpunkt, beispielsweise auf 60 bis 80° vor ZOT, gelegt wird. Das Ansteuerende α_{EE} der Schichteinspritzung wird nachfolgend kontinuierlich in Richtung spät verstellt. Gleichzeitig mit Beginn des Mehrfacheinspritzungsbetriebes zum Zeitpunkt t₂ beginnt eine progressive Spätverstellung des Zündwinkels α_{z}, der bei Motorstartende beispielsweise bei 10° vor ZOT lag. Einspritzwinkel α_{EE} und Zündwinkel α_{z} werden im Wesentlichen synchron spätverstellt, vorzugsweise mit einem konstanten Abstand zueinander von 50 bis 100°, insbesondere 60 bis 80°, wobei dieser Abstand abhängig von der Motordrehzahl n und/oder einem Einspritzdruck variiert werden kann. Auf diese Weise wird eine ausreichende Zeit für die Gemischaufbereitung sichergestellt. Zu einem Zeitpunkt t₄ haben Einspritzwinkel α_{EE} und Zündwinkel α_{z} ihre, hinsichtlich einer Heizleistung maximalen Vorgaben erreicht. Diese liegen beispielsweise für das Ansteuerende des Einspritzwinkels α_{EE} bei 40° vor ZOT und für den Zündwinkel α_{z} bei 20 bis 30° nach ZOT. Nach dem Zeitpunkt t₄ liegen somit die Heizmaßnahmen mit der stärksten Heizwirkung vor. Die progressive Zunahme der Heizwirkung zwischen den Zeitpunkten t₂ und t₄ gestattet das Erzielen einer gegenüber dem Stand der Technik stärkeren maximalen Heizwirkung. Durch die zum Zeitpunkt t₂ allmählich einsetzende Wirkungsgradverringerung werden starke Momentenschwankungen weitestgehend verhindert. Ferner wird durch den anfänglich sehr frühen Einspritzwinkel α_{EE} einem Abscheiden des in der zweiten Einspritzung eingespritzten Kraftstoffes am Kolbenboden, der zu diesem Zeitpunkt noch eine große Entfernung zum Einspritzventil aufweist, entgegengewirkt.

Die Ausbildung der Schichtladung der späten Einspritzung des Mehrfacheinspritzungsbetriebs sowie ihr Transport zur Zündkerze kann durch entsprechende Oberflächengestaltungen des Kolbenbodens, insbesondere Mulden, sowie durch die Erzeugung geeigneter Luftstromverhältnisse im Brennraum, gefördert werden. Diese Maßnahmen sind von schichtladefähigen, direkteinspritzenden Verbrennungskraftmaschinen bekannt und werden hier nicht näher erläutert. Das in Figur 3 gezeigte Ausführungsbeispiel des Verfahrens ist für Verbrennungskraftmaschinen, die den Schichtladebetrieb vorwiegend luftgeführt erzeugen, besonders vorteilhaft. Im Falle direkteinspritzender Motoren, die mit einem Gemischaufbereitungsverfahren mit hohem Wandführungsanteil arbeiten, ist das Verfahren jedoch nur suboptimal, da durch den noch weit unten befindlichen Kolben keine ideale Umlenkung der Einspritzwolke der Schichteinspritzung hin zur Zündkerze erfolgt und somit wegen einer starken Ausfaserung der Gemischwolke zum Zündzeitpunkt weiterhin mit keinem idealen Brennverlauf, resultierend in erhöhten HC-Emissionen, gerechnet werden muss.

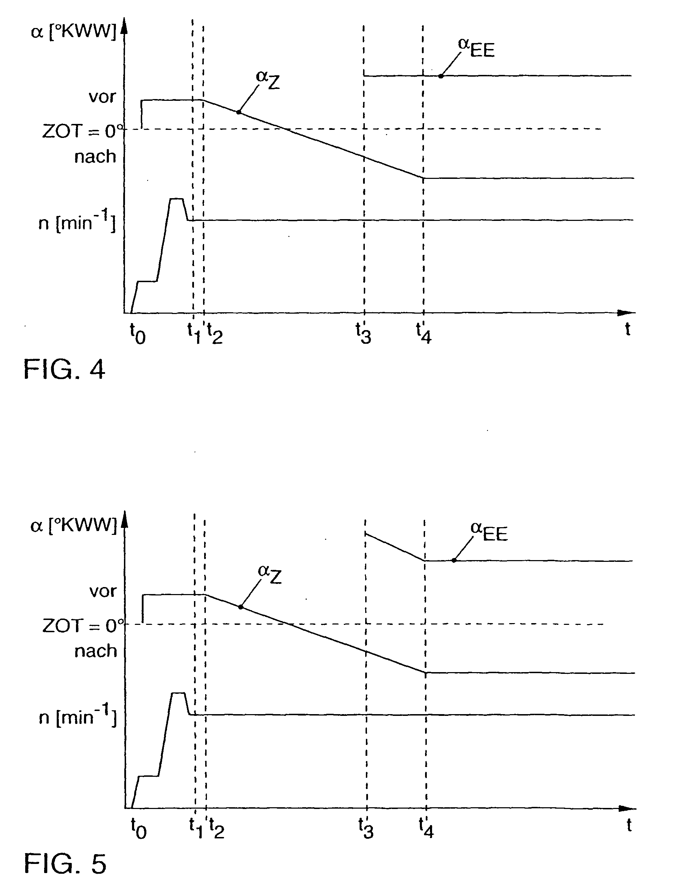

Eine erfindungsgemäße Weiterentwicklung des Verfahrens ist in Figur 4 dargestellt. Hier wird zum Zeitpunkt t₂, an dem die Heizanforderung des Katalysators erkannt wird, zunächst in einer ersten Phase als eine erste Heizmaßnahme eine progressive Spätverstellung des Zündwinkels α_{z} eingeleitet. Dabei wird die Verbrennungskraftmaschine mit einem Hauptanteil, vorzugsweise dem gesamten Kraftstoff, in homogener Brennraumverteilung betrieben, wofür der Kraftstoff vorzugsweise innerhalb des Ansaugtaktes eingespritzt wird. Die Einleitung des Mehrfacheinspritzungsbetriebes erfolgt zu einem Zeitpunkt t₃ bei einem Zündwinkel von 0° bis 20° nach ZOT, vorzugsweise bei 10° nach ZOT. Dieser Zündwinkelbereich stellt gleichzeitig eine Grenze dar, bis zu der ein stabiler Homogenbetrieb gerade noch möglich ist. Besonders vorteilhaft erfolgt die Umstellung in den Mehrfacheinspritzungsbetrieb einige Grad vor dem letztmöglichen Homogen-Zündwinkel, um eine Momentenreserve für einen eventuell erforderlichen korrigierenden Zündwinkeleingriff nach Umschaltung in die Mehrfacheinspritzung bereitzuhalten. Der letzte während des Einfacheinspritzungsbetriebes vorliegenden Zündwinkel α_{z} wird unter Berücksichtigung dieses Zündwinkeleingriffs im Mehrfacheinspritzungsbetrieb übernommen und auch nach der Umstellung zum Zeitpunkt t₃ progressiv spätverstellt, bis ein spätestmöglicher Einspritzwinkel α_{z} zum Zeitpunkt t₄ erreicht ist. Dieser liegt etwa bei maximal 35° nach ZOT. Auch hier sollte jedoch eine gewisse Momentenreserve berücksichtigt werden (etwa ± 2°), um beispielsweise im Leerlauf eine Momentenregelung durchführen zu können. Das Ansteuerende α_{EE} der Schichteinspritzung wird in diesem Fall von Anfang an auf eine Wunschvorgabe von beispielsweise 40° vor ZOT gelegt und nachfolgend nicht verändert, da von Beginn (t₃) der Mehrfacheinspritzung an ein ausreichender Abstand zwischen Zündwinkel α_{z} und Einspritzwinkel α_{EE} vorliegt. Somit kann stets eine ausreichende Gemischaufbereitung und ein optimaler Brennverlauf, auch während des Mehrfacheinspritzungsbetriebes, gewährleistet werden. Eine maximale Abgastemperatur ist in diesem Beispiel zum Zeitpunkt t₄ mit einer Verzögerung von einigen Arbeitsspielen nach dem Motorstartende zum Zeitpunkt t₁ erreicht.

Eine weitere vorteilhafte Weiterbildung des Verfahrens ist in Figur 5 dargestellt. Dabei wird der Zündwinkel α_{z} im Wesentlichen analog zum vorausgegangenen Beispiel gesteuert. Die Einleitung des Mehrfacheinspritzungsbetriebs erfolgt wiederum bei einem Zündwinkel α_{z} von etwa 10° nach ZOT, wobei für die Schichteinspritzung ein Ansteuerende des Einspritzwinkels α_{EE} von vorzugsweise zunächst 50 bis 70° vor ZOT eingestellt wird.

Nachfolgend wird der Zündwinkel α_{EE} synchron zum Einspritzwinkel α_{z} progressiv spätverstellt, bis zum Zeitpunkt t₄ Einspritzwinkel α_{EE} und Zündwinkel α_{z} ihre angestrebten Bereiche erreicht haben und die maximale Heizleistung vorliegt. Ab diesem Zeitpunkt werden beide Winkel konstant gehalten. Während des gesamten Mehrfacheinspritzungsbetriebes haben Einspritzende α_{EE} und Zündwinkel α_{z} einen weitgehend konstanten, gegebenenfalls motordrehzahl- und/oder einspritzdruckabhängigen Abstand von 50 bis 100°, vorzugsweise 60 bis 80°, so dass eine optimale Gemischaufbereitung erzielt wird. Hinsichtlich Momentenneutralität, Schadstoffemission und Laufruhe stellt das in Figur 5 dargestellte Beispiel die optimale Lösung dar.

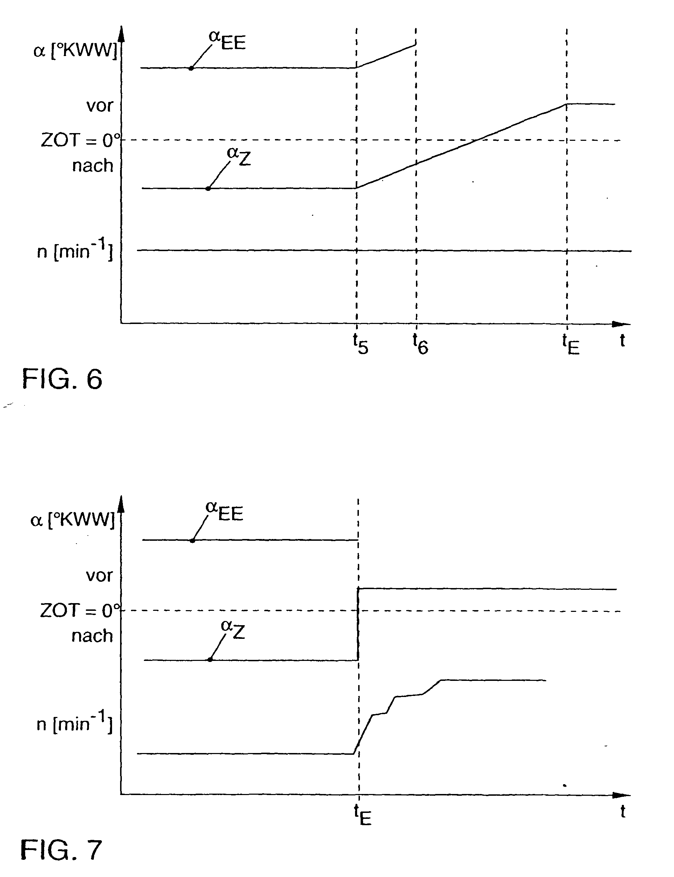

Die Rücknahme der jeweiligen motorischen Heizmaßnahmen erfolgt vorzugsweise in umgekehrter Reihenfolge zu ihrer Einleitung, soweit sich die Verbrennungskraftmaschine weitestgehend in einem konstanten Lastanforderungsbetrieb, beispielsweise in einem Leerlauf, befindet. Ein entsprechendes Ausführungsbeispiel ist in Figur 6 dargestellt. Hier wird zum Zeitpunkt t₅, beispielsweise anhand einer gemessenen und/oder modellierten Katalysatortemperatur, eine ausreichende Aufheizung des Katalysators, vorzugsweise eines Vorkatalysators, erkannt. Alternativ kann dieser Punkt auch anhand einer seit Motorstartende t₁ verstrichenen Zeit, seit Motorstartende erfolgten Umdrehungen, einer zurückgelegten Strecke und/oder eines eingetragenen Wärmestroms erkannt werden. Zu diesem Zeitpunkt t₅ werden sowohl das Ansteuerende α_{EE} der Schichteinspritzung als auch der Zündwinkel α_{z} stetig und mit im Wesentlichen gleichbleibendem, gegebenenfalls betriebspunktabhängigen Abstand zueinander in Richtung eines früheren Zeitpunktes verstellt. Sobald ein Zündwinkel α_{z} erreicht ist, bei dem beispielsweise ein Homogenbetrieb möglich ist, erfolgt eine Beendigung der Mehrfacheinspritzung (Zeitpunkt t₆). Nachfolgend wird der Zündwinkel α_{z} weiterhin progressiv früh verstellt, bis ungefähr ein abhängig vom aktuellen Betriebspunkt der Verbrennungskraftmaschine gewünschter Zündwinkel erreicht ist.

Wird dagegen das Ende des Warmlaufs zu einem Zeitpunkt erreicht, an dem eine positive Lastanforderung aufgebaut wird, beispielsweise zu Beginn einer Anfahrt oder einer Beschleunigung, so können, wie in Figur 7 gezeigt ist, alle Heizmaßnahmen zum Zeitpunkt t_{E} unmittelbar zurückgenommen werden und die vorhandene Füllung direkt zur Umsetzung der Leistungsanforderung genutzt werden. Insbesondere wird der Mehrfacheinspritzungsbetrieb beendet und der Zündwinkel α_{z} auf den für den aktuellen Betriebspunkt optimalen Bereich gestellt.

### BEZUGSZEICHENLISTE

- α_{z}: Zündwinkel
- α_{EE}: Ansteuerende Schichteinspritzung (Einspritzwinkel)
- HC_{ME}: HC-Rohemission bei Katalysatorwarmlauf mit herkömmlicher Mehrfacheinspritzung
- HC_{sz}: HC-Rohemission bei Katalysatorwarmlauf mit herkömmlicher Spätzündung
- KWW: Kurbelwellenwinkel
- n: Motordrehzahl
- t: Zeit
- t₁: Motorstartende
- V_{FZG}: Fahrzeuggeschwindigkeit
- ZOT: oberer Zündtotpunkt

## Patentansprüche

1. Verfahren zum Warmlauf mindestens eines einer fremdgezündeten, direkteinspritzenden Verbrennungskraftmaschine nachgeschalteten Katalysators, wobei nach einem Motorstartende (t₁) der Verbrennungskraftmaschine zumindest zeitweise eine Abgastemperatur durch motorische Maßnahmen angehoben wird, und die motorischen Maßnahmen nacheinander sukzessive zugeschaltet werden und eine Mehrfacheinspritzung, bei der innerhalb eines Ansaug- und Verdichtungstaktes eines Zylinders der Verbrennungskraftmaschine mindestens zwei Kraftstoffeinspritzungen in den Zylinder durchgeführt werden, und eine Zündwinkelspätverstellung umfassen, **dadurch gekennzeichnet, dass** der Zündwinkel (α_{z}) gegenüber einem motorwirkungsgradoptimierten Zündpunkt zumindest zeitweise progressiv spätverstellt wird, so dass die stärkste durch die Maßnahmen hervorgerufene Heizwirkung frühestens nach einer Verzögerung von mindestens zwei Arbeitsspielen der Verbrennungskraftmaschine nach dem Motorstartende (t₁) vorliegt.

2. Verfahren nach Anspruch 1, **dadurch gekennzeichnet, dass** die motorische Maßnahme oder die Kombination von Maßnahmen mit der stärksten Heizwirkung frühestens nach einer Verzögerung von mindestens drei, insbesondere mindestens fünf, Arbeitsspielen der Verbrennungskraftmaschine nach dem Motorstartende (t₁) vorliegt.

3. Verfahren nach Anspruch 1, **dadurch gekennzeichnet, dass** nach dem Motorstartende (t₁) in einer ersten Phase ein Einfacheinspritzungsbetrieb mit zumindest zeitweiser Zündwinkelspätverstellung durchgeführt wird und in einer anschließenden zweiten Phase in einen Mehrfacheinspritzungsbetrieb umgeschaltet wird.

4. Verfahren nach einem der vorhergehenden Ansprüche, **dadurch gekennzeichnet, dass** die Mehrfacheinspritzung zwei Einspritzungen umfasst, wobei eine erste, frühe Einspritzung im Wesentlichen während eines Ansaugtaktes und eine zweite, späte Einspritzung während eines anschließenden Verdichtungstaktes erfolgt und der in der frühen Einspritzung zugeführte Kraftstoff zum Zündzeitpunkt eine im Wesentlichen homogene Verteilung im Brennraum des Zylinders einnimmt und der in der späten Einspritzung zugeführte Kraftstoff sich zum Zündzeitpunkt im Wesentlichen in Schichtladung im Bereich um eine Zündkerze konzentriert.

5. Verfahren nach Anspruch 4, **dadurch gekennzeichnet, dass** die frühe Einspritzung insbesondere in einer ersten Hälfte des Ansaugtaktes und die späte Einspritzung in einer zweiten Hälfte des Verdichtungstaktes erfolgt.

6. Verfahren nach einem der Ansprüche 3 bis 5 soweit auf Anspruch 3 rückbezogen, **dadurch gekennzeichnet, dass** die erste Phase zunächst mit einem frühen Zündwinkel (α_{z}), insbesondere mit einem Zündwinkel (α_{z}) vor einem oberen Totpunkt (ZOT), begonnen wird und nachfolgend der Zündwinkel progressiv, kontinuierlich und/oder stufenweise in Richtung eines späteren Zeitpunktes, insbesondere bis zu einem Zündwinkel (α_{z}) nach dem oberen Totpunkt (ZOT), verstellt wird.

7. Verfahren nach Anspruch 6, **dadurch gekennzeichnet, dass** die Umstellung in den Mehrfacheinspritzungsbetrieb bei einem Zündwinkel (α_{z}) von 0 bis 20° nach ZOT, insbesondere von 10° nach ZOT, erfolgt.

8. Verfahren nach Anspruch 7, **dadurch gekennzeichnet, dass** die Umstellung in den Mehrfacheinspritzungsbetrieb um 6°, insbesondere um 4°, insbesondere um 2° vor einem Zündwinkel (α_{z}) erfolgt, bei dem ein reiner Homogenbetrieb gerade noch möglich ist.

9. Verfahren nach einem der Ansprüche 6 bis 8, **dadurch gekennzeichnet, dass** bei Umstellung in den Mehrfacheinspritzungsbetrieb der letzte Zündwinkel (α_{z}) der ersten Phase übernommen wird und die progressive Zündwinkelspätverstellung nach Umstellung in den Mehrfacheinspritzungsbetrieb fortgesetzt wird.

10. Verfahren nach Anspruch 9, **dadurch gekennzeichnet, dass** die progressive Zündwinkelspätverstellung maximal bis zu einem Zündwinkel (α_{z}) von 20 bis 45° nach ZOT, insbesondere bis zu einem Zündwinkel (α_{z}) von 35° nach ZOT, erfolgt.

11. Verfahren nach einem der vorhergehenden Ansprüche, **dadurch gekennzeichnet, dass** ein Einspritzwinkel. (α_{EE}) der späten Einspritzung der Mehrfacheinspritzung im Wesentlichen synchron mit der progressiven Zündwinkelspätverstellung spätverstellt wird.

12. Verfahren nach Anspruch 11, **dadurch gekennzeichnet, dass** ein Einspritzende (α_{EE}) der späten Einspritzung mit einem im Wesentlichen konstanten Abstand zu dem Zündwinkel (a_{z}) von 50 bis 100°, insbesondere von 60 bis 80°, verstellt wird.

13. Verfahren nach Anspruch 12, **dadurch gekennzeichnet, dass** der Abstand zwischen dem Einspritzende (α_{EE}) der späten Einspritzung und dem Zündwinkel (α_{z}) abhängig von Motordrehzahl (n) und/oder einem Einspritzdruck variiert wird.

14. Verfahren nach einem der Ansprüche 11 bis 13, **dadurch gekennzeichnet, dass** das Einspritzende der späten Einspritzung zunächst mit einem Winkel (α_{EE}) von 40 bis 90° vor ZOT, insbesondere von 50 bis 80° vor ZOT, angesteuert wird und anschließend auf einen Winkel (α_{EE}) von 30 bis 50° vor ZOT, insbesondere von 40° vor ZOT, verstellt wird.

15. Verfahren nach einem der vorhergehenden Ansprüche, **dadurch gekennzeichnet, dass** die Einleitung derjenigen motorischen Maßnahme oder derjenigen Kombination von Maßnahmen mit der stärksten Heizwirkung und/oder die Umschaltung in den Mehrfacheinspritzungsbetrieb anhand einer gemessenen und/oder modellierten Motor- und/oder Abgas- und/oder Katalysatortemperatur erkannt wird und/oder anhand einer seit Motorstartende verstrichenen Zeit und/oder seit Motorstartende erfolgten Kurbelwellenumdrehungen und/oder einer seit Motorstartende zurückgelegten Strecke und/oder einem seit Motorstartende kumulierten Abgaswärmestrom.

16. Verfahren nach einem der vorhergehenden Ansprüche, **dadurch gekennzeichnet, dass** wenn sich die Verbrennungskraftmaschine nach zumindest teilweisem Warmlauf mindestens eines ersten Katalysators in einer Phase mit im Wesentlichen konstanter Last, insbesondere in einem Leerlauf befindet, der Zündwinkel (α_{z}) und/oder der Einspritzwinkel (α_{EE}) progressiv frühverstellt wird und die Mehrfacheinspritzung beendet und in den Einfacheinspritzungsbetrieb umgeschaltet wird, sobald der Zündwinkel (α_{z}) einen Homogenbetrieb gestattet.

17. Verfahren nach Anspruch 16, **dadurch gekennzeichnet, dass** die Umschaltung in den Einfacheinspritzungsbetrieb bei einem Zündwinkel (α_{z}) von 5 bis 15° nach ZOT, insbesondere von 10° nach ZOT, erfolgt.

18. Verfahren nach Anspruch 16 oder 17, **dadurch gekennzeichnet, dass** nach der Umschaltung in den Einfacheinspritzungsbetrieb die progressive Zündwinkelfrühverstellung fortgesetzt wird.

19. Verfahren nach einem der vorhergehenden Ansprüche, **dadurch gekennzeichnet, dass** wenn sich die Verbrennungskraftmaschine nach zumindest teilweisem Warmlauf mindestens eines ersten Katalysators in einer Lastanforderungsphase, insbesondere in einer Anfahrts- und/oder Beschleunigungsphase, befindet, die Mehrfacheinspritzung und/oder die Zündwinkelspätverstellung unmittelbar beendet und in den Einfacheinspritzungsbetrieb umgeschaltet wird.

20. Verfahren nach einem der Ansprüche 16 bis 19, **dadurch gekennzeichnet, dass** der erfolgte Warmlauf anhand einer gemessenen und/oder modellierten Abgas- und/oder Katalysatortemperatur erkannt wird und/oder anhand einer seit Motorstartende verstrichenen Zeit und/oder erfolgten Kurbelwellenumdrehungen und/oder einer seit Motorstartende zurückgelegten Strecke und/oder dem kumulierten Abgaswärmestrom.

## Claims

1. Method for warming up at least one catalytic converter which is positioned downstream of a spark-ignition, direct-injection internal combustion engine, with an exhaust-gas temperature being raised at least temporarily by means of engine-related measures after the end of an engine start (t₁), and with the engine-related measures being activated successively one after the other and comprising a multiple injection, in which at least two fuel injections into a cylinder of the internal combustion engine are carried out within an intake and compression stroke of the cylinder, and comprising a retardation of the ignition angle, **characterized in that** the ignition angle (α_{z}) is at least temporarily retarded progressively with respect to an ignition time for optimum engine efficiency, such that the most intense heating action brought about by the measures is present at the earliest after a delay of at least two working cycles of the internal combustion engine after the end of the engine start (t₁).

2. Method according to Claim 1, **characterized in that** the engine-related measure or the combination of measures with the most intense heating action is present at the earliest after a delay of at least three, in particular at least five, working cycles of the internal combustion engine after the end of the engine start (t₁) .

3. Method according to Claim 1, **characterized in that**, after the end of the engine start (t₁), single-injection operation with an at least temporary ignition angle retardation is carried out in a first phase, and a switch is made to multiple-injection operation in a subsequent second phase.

4. Method according to one of the preceding claims, **characterized in that** the multiple injection comprises two injections, with a first, early injection taking place substantially during an intake stroke, and a second, late injection taking place during a subsequent compression stroke, and with the fuel supplied in the early injection assuming a substantially homogeneous distribution in the combustion chamber of the cylinder at the ignition time, and with the fuel supplied in the late injection being concentrated substantially in stratified-charge form in the region around a spark plug at the ignition time.

5. Method according to Claim 4, **characterized in that** the early injection takes place in particular in a first half of the intake stroke, and the late injection takes place in a second half of the compression stroke.

6. Method according to one of Claims 3 to 5, where referred back to Claim 3, **characterized in that** the first phase begins initially with an early ignition angle (α_{z}), in particular with an ignition angle (α_{z}) before top dead centre (ZOT), and the ignition angle is subsequently adjusted progressively, continuously and/or in a stepped fashion in the direction of a later time, in particular up to an ignition angle (α_{z}) after top dead centre (ZOT).

7. Method according to Claim 6, **characterized in that** the switch to multiple-injection operation takes place at an ignition angle (α_{z}) of 0 to 20° after ZOT, in particular of 10° after ZOT.

8. Method according to Claim 7, **characterized in that** the switch to multiple-injection operation takes place at 6°, in particular at 4°, in particular at 2° before an ignition angle (α_{z}) at which purely homogeneous operation is still presently possible.

9. Method according to one of Claims 6 to 8, **characterized in that**, during the switch to multiple-injection operation, the last ignition angle (α_{z}) of the first phase is assumed, and the progressive ignition angle retardation is continued after the switch to multiple-injection operation.

10. Method according to Claim 9, **characterized in that** the progressive ignition angle retardation takes place at a maximum up to an ignition angle (α_{z}) of 20 to 45° after ZOT, in particular up to an ignition angle (α_{z}) of 35° after ZOT.

11. Method according to one of the preceding claims, **characterized in that** an injection angle (α_{EE}) of the late injection of the multiple injection is retarded substantially synchronously with the progressive ignition angle retardation.

12. Method according to Claim 11, **characterized in that** an injection end (α_{EE}) of the late injection is adjusted with a substantially constant distance to the ignition angle (α_{z}) of 50 to 100°, in particular of 60 to 80°.

13. Method according to Claim 12, **characterized in that** the distance between the injection end (α_{EE}) of the late injection and the ignition angle (α_{z}) is varied as a function of the engine speed (n) and/or an injection pressure.

14. Method according to one of Claims 11 to 13, **characterized in that** the injection end of the late injection is controlled firstly with an angle (α_{EE}) of 40 to 90° before ZOT, in particular of 50 to 80° before ZOT, and is subsequently adjusted to an angle (α_{EE}) of 30 to 50° before ZOT, in particular of 40° before ZOT.

15. Method according to one of the preceding claims, **characterized in that** the initiation of the engine-related measure, or combination of measures, with the most intense heating action, and/or the switch to multiple-injection operation, is detected on the basis of a measured and/or modelled engine temperature and/or exhaust-gas temperature and/or catalytic converter temperature, and/or on the basis of a time which has elapsed since the end of the engine start, and/or crankshaft rotations which have taken place since the end of the engine start, and/or a distance travelled since the end of the engine start, and/or a cumulative exhaust-gas heat flow since the end of the engine start.

16. Method according to one of the preceding claims, **characterized in that**, if the internal combustion engine is in a phase with substantially constant load, in particular at idle, after at least one first catalytic converter has at least partially warmed up, the ignition angle (α_{z}) and/or the injection angle (α_{EE}) is progressively advanced and the multiple injection is ended and a switch is made to single-injection operation once the ignition angle (α_{z}) permits homogeneous operation.

17. Method according to Claim 16, **characterized in that** the switch into single-injection operation takes place at an ignition angle (α_{z}) of 5 to 15° after ZOT, in particular of 10° after ZOT.

18. Method according to Claim 16 or 17, **characterized in that** the progressive ignition angle advancement is continued after the switch to single-injection operation.

19. Method according to one of the preceding claims, **characterized in that**, if the internal combustion engine is in a load-demand phase, in particular in a starting and/or acceleration phase, after at least one first catalytic converter has at least partially warmed up, the multiple injection and/or the ignition angle retardation is directly ended and a switch is made to single-injection operation.

20. Method according to one of Claims 16 to 19, **characterized in that** the completion of the warm-up is detected on the basis of a measured and/or modelled exhaust-gas temperature and/or catalytic converter temperature, and/or on the basis of a time which has elapsed since the end of the engine start, and/or crankshaft rotations which have taken place, and/or a distance travelled since the end of the engine start, and/or the cumulative exhaust-gas heat flow.

## Revendications

1. Procédé pour le chauffage d'au moins un catalyseur monté en aval d'un moteur à combustion interne à injection directe et allumage par étincelle, dans lequel, après la fin du démarrage (t₁) du moteur à combustion interne, une température de gaz d'échappement est augmentée au moins temporairement par des mesures affectant le moteur, et les mesures affectant le moteur sont commutées successivement et incluent une injection multiple, au cours de laquelle, pendant un temps d'admission et de compression d'un cylindre du moteur à combustion interne, au moins deux injections de carburant ont lieu dans le cylindre, et un réglage dans le sens d'un retard à l'allumage, **caractérisé en ce que** l'angle d'allumage (α_{z}) est retardé progressivement, au moins temporairement, par rapport à un point d'allumage optimisé en termes de rendement du moteur, de telle sorte que l'effet de chauffage le plus important provoqué par les mesures ait lieu au plus tôt après un retard d'au moins deux cycles de combustion du moteur à combustion interne après la fin du démarrage du moteur (t₁) .

2. Procédé selon la revendication 1, **caractérisé en ce que** la mesure affectant le moteur, ou la combinaison de mesures ayant l'effet de chauffage le plus important a lieu au plus tôt après un retard d'au moins trois, en particulier d'au moins cinq cycles de combustion du moteur à combustion interne après la fin du démarrage du moteur (t₁).

3. Procédé selon la revendication 1, **caractérisé en ce qu'**après la fin du démarrage du moteur (t₁), dans une première phase, un mode d'injection simple est mis en oeuvre avec un réglage dans le sens d'un retard à l'allumage au moins temporaire, et dans une deuxième phase suivante, est commuté à un mode d'injection multiple.

4. Procédé selon l'une quelconque des revendications précédentes, **caractérisé en ce que** l'injection multiple comprend deux injections, une première injection précoce ayant lieu essentiellement pendant un temps d'admission, et une deuxième injection tardive ayant lieu pendant un temps de compression subséquent, et le carburant acheminé pendant l'injection précoce étant réparti de manière essentiellement homogène dans la chambre de combustion du cylindre à l'instant de l'allumage et le carburant acheminé pendant l'injection tardive se concentrant à l'instant de l'allumage essentiellement en charge stratifiée dans la région entourant une bougie d'allumage.

5. Procédé selon la revendication 4, **caractérisé en ce que** l'injection précoce a lieu notamment dans une première moitié du temps d'admission et l'injection tardive a lieu dans une deuxième moitié du temps de compression.

6. Procédé selon l'une quelconque des revendications 3 à 5, dans la mesure où elles se rapportent à la revendication 3, **caractérisé en ce que** la première phase débute avec un angle d'allumage précoce (α_{z}), notamment un angle d'allumage (α_{z}) avant un point mort haut (ZOT), et ensuite l'angle d'allumage est progressivement, en continu et/ou par incréments, réglé dans le sens d'un instant ultérieur, notamment jusqu'à un angle d'allumage (α_{z}) après le point mort haut (ZOT).

7. Procédé selon la revendication 6, **caractérisé en ce que** la commutation au mode d'injection multiple s'effectue à un angle d'allumage (α_{z}) de 0 à 20° après le ZOT, notamment de 10° après le ZOT.

8. Procédé selon la revendication 7, **caractérisé en ce que** la commutation au mode d'injection multiple a lieu à 6°, notamment à 4°, en particulier à 2° avant un angle d'allumage (α_{z}) auquel un mode purement homogène est justement encore possible.

9. Procédé selon l'une quelconque des revendications 6 à 8, **caractérisé en ce que** lors de la commutation au mode d'injection multiple, le dernier angle d'allumage (α_{z}) de la première phase est repris et le réglage progressif dans le sens d'un retard à l'allumage est poursuivi après la commutation au mode d'injection multiple.

10. Procédé selon la revendication 9, **caractérisé en ce que** le réglage progressif dans le sens d'un retard à l'allumage s'effectue au maximum jusqu'à un angle d'allumage (α_{z}) de 20 à 45° après le ZOT, notamment jusqu'à un angle d'allumage (α_{z}) de 35° après le ZOT.

11. Procédé selon l'une quelconque des revendications précédentes, **caractérisé en ce que** l'on règle dans le sens d'un retard un angle d'injection (α_{EE}) de l'injection tardive de l'injection multiple essentiellement de manière synchronisée avec le réglage progressif dans le sens d'un retard à l'allumage.

12. Procédé selon la revendication 11, **caractérisé en ce qu'**une fin d'injection (α_{EE}) de l'injection tardive est réglée avec une distance essentiellement constante à l'angle d'allumage (α_{z}) de 50 à 100°, notamment de 60 à 80°.

13. Procédé selon la revendication 12, **caractérisé en ce que** la distance entre la fin de l'injection (α_{EE}) de l'injection tardive et l'angle d'allumage (α_{z}) est modifiée en fonction du régime du moteur (n) et/ou d'une pression d'injection.

14. Procédé selon l'une quelconque des revendications 11 à 13, **caractérisé en ce que** la fin de l'injection de l'injection tardive est d'abord commandée avec un angle (α_{EE}) de 40 à 90° avant le ZOT, en particulier de 50 à 80° avant le ZOT, puis est réglée à un angle (α_{EE}) de 30 à 50° avant le ZOT, en particulier de 40° avant le ZOT.

15. Procédé selon l'une quelconque des revendications précédentes, **caractérisé en ce que** l'introduction de la mesure affectant le moteur ou de la combinaison de mesures ayant l'effet de chauffage le plus important et/ou la commutation au mode d'injection multiple est détectée à l'aide d'une température du moteur et/ou de gaz d'échappement et/ou de catalyseur mesurée et/ou modélisée et/ou est détectée à l'aide d'un temps écoulé depuis la fin du démarrage du moteur et/ou de rotations du vilebrequin effectuées depuis la fin du démarrage du moteur et/ou d'une distance parcourue depuis la fin du démarrage du moteur et/ou d'un flux de chauffage de gaz d'échappement cumulé depuis la fin du démarrage du moteur.

16. Procédé selon l'une quelconque des revendications précédentes, **caractérisé en ce que** lorsque le moteur à combustion interne après un chauffage au moins partiel d'au moins un premier catalyseur se trouve dans une phase de charge sensiblement constante, en particulier en marche à vide, l'angle d'allumage (α_{z}) et/ou l'angle d'injection (α_{EE}) est réglé progressivement en avance, et l'injection multiple est terminée et commutée au mode d'injection simple dès que l'angle d'allumage (α_{z}) permet un fonctionnement homogène.

17. Procédé selon la revendication 16, **caractérisé en ce que** la commutation au mode d'injection simple s'effectue pour un angle d'allumage (α_{z}) de 5 à 15° après le ZOT, notamment de 10° après le ZOT.

18. Procédé selon la revendication 16 ou 17, **caractérisé en ce qu'**après la commutation au mode d'injection simple, le réglage progressif en avance à l'allumage est poursuivi.

19. Procédé selon l'une quelconque des revendications précédentes, **caractérisé en ce que** lorsque le moteur à combustion interne après un chauffage au moins partiel d'au moins un premier catalyseur se trouve dans une phase de demande de charge, en particulier dans une phase de départ et/ou d'accélération, l'injection multiple et/ou le réglage dans le sens d'un retard à l'allumage est immédiatement terminé et l'on passe au mode d'injection simple.

20. Procédé selon l'une quelconque des revendications 16 à 19, **caractérisé en ce que** le chauffage effectué est détecté à l'aide d'une température de gaz d'échappement et/ou de catalyseur mesurée et/ou modélisée et/ou à l'aide d'un temps écoulé depuis la fin du démarrage du moteur et/ou à l'aide de rotations du vilebrequin effectuées et/ou d'une distance parcourue depuis la fin du démarrage du moteur et/ou du flux de chauffage de gaz d'échappement cumulé.
